(19) Europäisches Patentamt
European Patent Office
Office européen des brevets

(11) Publication number: **0 141 347**
**A2**

# (12) EUROPEAN PATENT APPLICATION

(21) Application number: 84112584.2

(22) Date of filing: 18.10.84

(51) Int. Cl.[4]: C 08 L 79/08

(30) Priority: 24.10.83 US 544968

(43) Date of publication of application:
15.05.85 Bulletin 85/20

(84) Designated Contracting States:
DE FR GB IT NL

(71) Applicant: GENERAL ELECTRIC COMPANY
1 River Road
Schenectady New York 12305(US)

(72) Inventor: Allen, Deborah Lynne
525 Windsor Road
Dalton Massachusetts 01226(US)

(74) Representative: Schüler, Horst, Dr. European Patent Attorney et al,
Kaiserstrasse 41
D-6000 Frankfurt/Main 1(DE)

## (54) Blends of polyetherimide and polyacrylate elastomers.

(57) Homogenous blends of polyetherimide polymers and polyacrylate elastomers prepared by solution blending techniques or melt blending are characterized by high impact strengths.

EP 0 141 347 A2

# BLENDS OF POLYETHERIMIDE AND POLYACRYLATE ELASTOMERS

This invention is concerned with a new class of polyetherimide-polyacrylate blends. These blends exhibit higher impact strengths than those associated with the polyetherimide component of the blends.

The novel polyetherimide-polyacrylate elastomer blends comprise (A) a polyetherimide of the formula

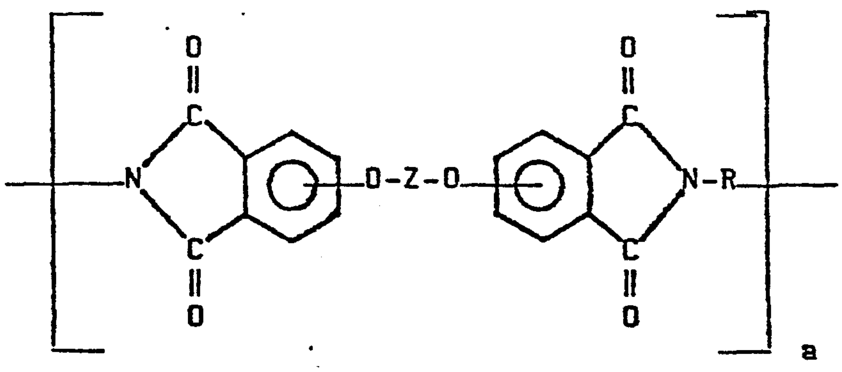

wherein a represents a whole number in excess of 1 (e.g from 10 to about 10,000 or more), and Z is a member of the class consisting of (1).

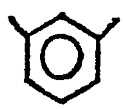
,
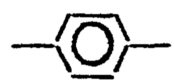
,
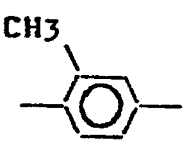
,

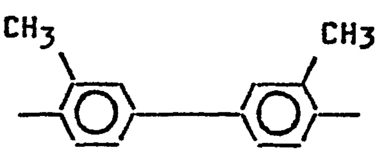
,
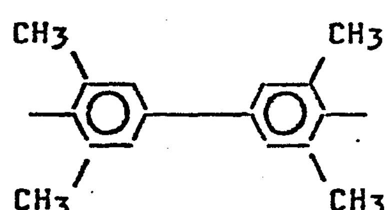

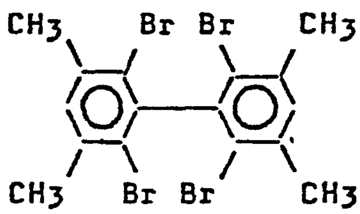
and
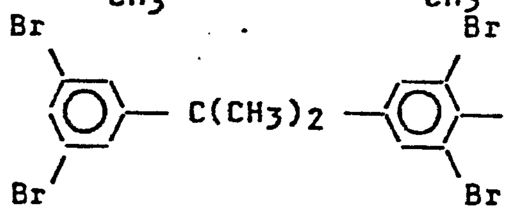

and (2) divalent organic radicals of the general formula:

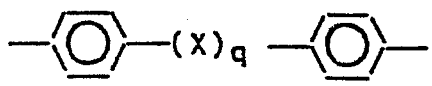

where X is a member selected from the class consisting of divalent radicals of the formulas

$$-C_yH_{2y}-,\ -\overset{O}{\overset{\|}{C}}-,\ -\underset{\underset{O}{\|}}{\overset{\overset{O}{\|}}{S}}-,\ -O-\ \text{and}\ -S-$$

where q is 0 or 1, y is a whole number from 1 to about 5, the divalent bonds of the -O-Z-O- radical being situated on the phthalic anhydride end groups, e.g., in the 3,3'-, 3,4'-, 4,3'-, or the 4,4'- positions and R is a divalent organic radical selected from the class consisting of (a) aromatic hydrocarbon radicals having from 6 to about 20 carbon atoms and halogenated derivatives thereof, (b) alkylene radicals and cycloalkylene radicals having from 2 to about 20 carbon atoms, $C_{(2-8)}$ alkylene terminated polydiorganosiloxanes, and (c) divalent radicals included by the formula

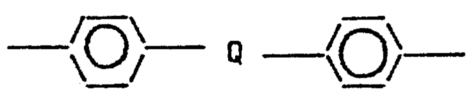

where Q is a member selected from the class consisting of

$$-O-,\ -\overset{O}{\overset{\|}{C}}-,\ -\underset{\underset{O}{\|}}{\overset{\overset{O}{\|}}{S}}-,\ -S-,\ \text{and}\ -C_xH_{2x}-$$

where x is a whole number from 1 to about 5 inclusive, and (B) a polyacrylate elastomer.

The polyacrylate elastomers employed in the blends of this invention are homo- or copolymers of lower alkyl esters of acrylic or methacrylic acid, wherein the alkyl groups contain from 1 to about 10 carbon atoms, preferably from 2 to about 6 carbon atoms. Examples of such elastomers include polymers of ethyl acrylate, butyl acrylate, hexyl acrylate, 2-ethylhexyl acrylate, methyl methacrylate, ethyl methacrylate, octyl methacrylate and the like, and copolymers or terpolymers thereof. Preferred polymers are polyethylacrylate or polyethylacrylate-polybutylacrylate copolymers. These polymers and methods for their production are well known.

These polyacrylate elastomers are presently commercially available products, and a preferred elastomer is a polyethylacrylate which can be obtained, for example, from B.F. Goodrich Company Chemical Group, Cleveland, Ohio, U.S.A. under the trademark, Hycar® 4004. Hycar 4004 is characterized by a Mooney Viscosity (ML-4, 100°C.) of 30, a glass transition temperature of -41.0°C and a refractive index (at 20°C.) of 1.466.

The polyetherimides described above can be obtained by any of the methods well known to those skilled in the art, including the reaction of aromatic bis (ether anhydrides) of the formula

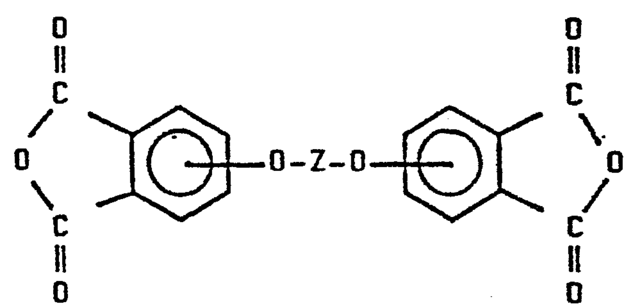

where Z is defined as above, with an organic diamine of the formula

$$H_2N-R-NH_2$$

where R is as defined above. In general, the reactions can be advantageously carried out employing well-known solvents, e.g., o-dichlorobenzene, m-cresol/toluene, and the like, at elevated temperatures from about 100°C to about 250°C. Alternatively, the polyetherimides can be prepared by melt polymerization of an aromatic bis (ether anhydride) with an organic diamine, as described above, while heating the mixture of the ingredients to an elevated temperature with concurrent mixing. Generally, melt polymerization temperatures between about 200° to about 400°C. and preferably about 230°C. to about 300°C. can be employed. Any order of addition of chain stoppers ordinarily employed in melt polymerization can be employed. The conditions of the reaction and the proportions of ingredients can be varied widely depending on the molecular weight, intrinsic viscosity, and solvent resistance. In general equimolar amounts of organic diamine and bis (ether anhydride) are employed for high molecular weight polyetherimides. However, in certain instances, a slight molar excess (about 1 to 5 mole %) of diamine can be employed, resulting in the production of polyetherimides having terminal amine groups. Generally useful polyetherimides (hereinafter sometimes referred to as PEI) have an intrinsic viscosity greater than 0.2 deciliters per gram, preferably 0.3 to 0.60, or 0.7 deciliters per gram or even higher when measured in m-cresol at 25°C.

Included among the many methods of making the polyetherimides described above are those disclosed in U.S. Patents to Heath et al. 3,847,867, Williams 3,847,869, Takekoshi et al. 3,850,885, White 3,852,242 and 3,855,178, etc. These disclosures are incorporated

herein in their entirety by reference for the purpose of teaching, by way of illustration, general and specific methods for preparing polyetherimides suited to the practice of this invention.

The aromatic bis(ether anhydride)s employed as starting material for making such polyetherimides include, for example,

2,2-bis[4-(2,3-dicarboxyphenoxy)phenyl]-propane dianhydride;

4,4'-bis(2,3-dicarboxyphenoxy)diphenyl ether dianhydride;

1,3-bis(2,3-dicarboxyphenoxy)benzene dianhydride;

4,4'-bis(2,3-dicarboxyphenoxy)diphenyl sulfide dianhydride;

1,4-bis(2,3-dicarboxyphenoxy)benzene dianhydride;

4,4'-bis(2,3-dicarboxyphenoxy)benzophenone dianhydride;

4,4'-bis(2,3-dicarboxyphenoxy)diphenyl sulfone dianhydride; etc.

2,2-bis[4-(3,4-dicarboxyphenoxy)phenyl]propane dianhydride;

4,4'-bis(3,4-dicarboxyphenoxy)diphenyl ether dianhydride;

4,4'-bis(3,4-dicarboxyphenoxy)diphenyl sulfide dianhydride;

1,3-bis(3,4-dicarboxyphenoxy)benzene dianhydride;

1,4-bis(3,4-dicarboxyphenoxy)benzene dianhydride;

4,4'-bis(3,4-dicarboxyphenoxy)benzophenone dianhydride;

4-(2,3-dicarboxyphenoxy)-4'-(3,4-dicarboxyphenoxy)diphenyl-2,2-propane dianhydride; etc. and mixtures of such dianhydrides.

Additionally, aromatic bis(ether anhydride)s are shown by Koton, M.M.; Florinski, F.S.; Bessonov, M.I.; Rudakov, A.P. (Institute of Heteroorganic Compounds,

Academy of Sciences, U.S.S.R.), U.S.S.R. 257,010, Nov. 11, 1969, Appl. May 3,1967. In addition, dianhydrides are shown by M M. Koton, F.S. Florinski, Zh. Org. Khin., 4(5), 774 (1968).

The organic diamines include, for example,
m-phenylenediamine,
p-phenylenediamine,
4-4'-diaminodiphenylpropane,
4-4'-diaminodiphenylmethane,
benzidine,
4,4'-diaminodiphenyl sulfide,
4,4'-diaminodiphenyl sulfone,
4,4'-diaminodiphenyl ether,
1,5-diaminophthalene,
3,3'-dimethylbenzidine,
3,3'-dimethoxybenzidine,
2,4-bis(β-amino-t-butyl)toluene,
bis(p-β-amino-t-butylphenyl)ether,
bis(p-β-methyl-o-aminopentyl)benzine,
1,3-diamino-4-isopropylbenzene,
1,2-bis(3-aminopropoxy)ethane,
m-xylylenediamine,
p-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,

3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine,
bis(3-aminopropyl)tetramethyldisiloxane,
bis(4-amiobutyl)tetramethyldisiloxane, etc.,
and mixtures of such diamines.

The polyetherimides and polyacrylate elastomers are compatible with each other within the ranges of proportions contemplated in the present invention. Generally, the blends of this invention employ from about 3 wt. % to about 15 wt. % polyacrylate elastomer, the balance being essentially polyetherimide. In preferred blends, the concentration of polyacrylate elastomer ranges from about 5% to about 12% by wt., most preferably about 10% by wt. Blends within these proportions have been found to have improved impact strengths, as compared to unmodified polyetherimides.

The following examples further illustrate the present invention, but are not intended to be limiting.

## Example I

10 parts of polyetherimide of the above formula, wherein Z represents a group of the formula

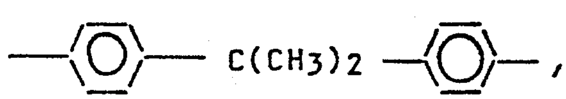

the phthalic anhydride groups are substituted in the 4,4'- positions, and R represents m-phenylene were mixed with 1 part of polyacrylate elastomer, which was a polyethylacrylate obtained from Goodrich Chemical Group, Cleveland, Ohio as Hycar® 4004. These polymers were mixed by melting the polyetherimide in a blade type mixer and then lowering the temperature to just above the glass transition temperature. At this point, the polyacrylate elastomer was added and the material blended. The resulting blend was ———————————————— then compression molded into 1/8 inch sheets. These sheets were cut into bars measuring 2-1/2 inches by 1/2 inch, which were notched and tested by the standard notched Izod impact test. Unmodified polyetherimide of the same formula was also subjected to this test as a control. The notched Izod test was conducted substantially as described in ASTM test D256, incorporated herein by reference. The impact strength of the polyacrylate/polyetherimide blend was determined to be 1.1 and 1.4 foot-pounds per inch in duplicate runs, whereas the impact strength of the unmodified polyetherimide was determined to be 0.6 and 0.7 foot-pounds per inch in duplicate runs.

The glass transition temperatures ($T_g$) of the unmodified polyetherimide and the polyacrylate/polyetherimide blend were measured to be 214°C. in in all samples. The single glass transition temperature is an indication of compatibility between the two polymers.

## Example II

Film castings of blends of polyetherimide and the polyacrylate elastomer described in Example I were prepared by preparing a 10% chloroform solution of the polyetherimide and a 1% chloroform solution of the

polyacrylate (Hycar® 4004, B. F. Goodrich) and mixing them in equal volumes to form a 10:1 (wt.:wt.) ratio. A film was cast by spreading the solution on a Mylar® sheet followed by air evaporation of the solvent. The resulting film was removed from the Mylar and was inspected. The film was transparent, evidencing compatibility of the two polymers.

## Example III

Solution blends of polyetherimide and an acrylic ester copolymer of ethylacrylate and butylacrylate (Hycar 4051CG, B.F. Goodrich) were prepared by the procedure described in Example II. The polyacrylate used had a Mooney Viscosity (ML-4-100°C) of 32, a glass transition temperature of -15.0°C. and a refractive index (20°C.) of 1.469. The resulting film was clear, evidencing compatibility, and somewhat tacky.

0141347
10348-8CU-03848

CLAIMS

1. A polyetherimide-polyacrylate elastomer blend comprising: (A) from about 85 wt. & to about 97 wt. % of a polyetherimide of the formula:

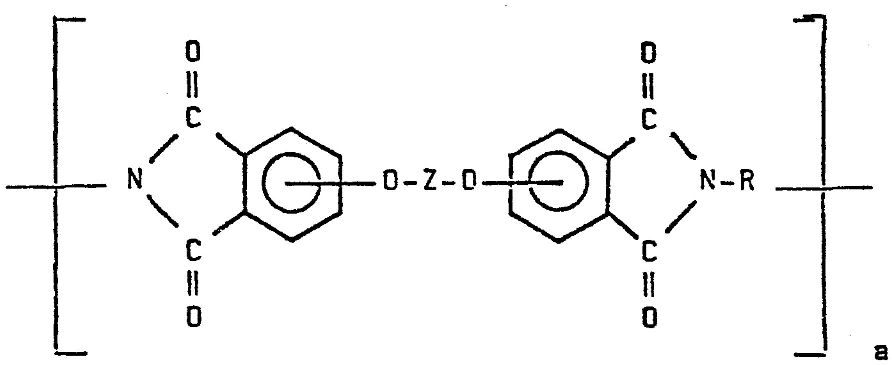

where a represents a whole number in excess of 1, -O-Z-O- is in the 3,3'-, 3,4'-, 4,3'- or 4,4'- positions and Z is a member of the class consisting of (1)

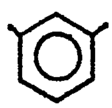 , 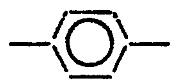 , 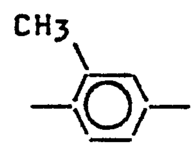 ,

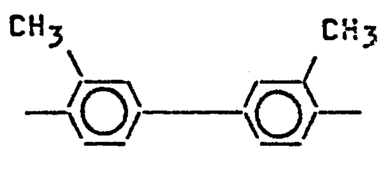 , 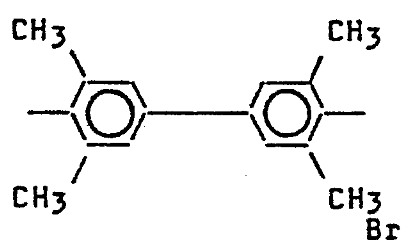

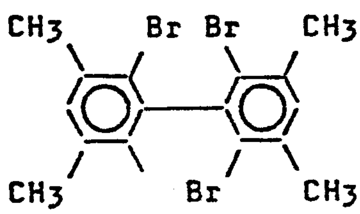 and 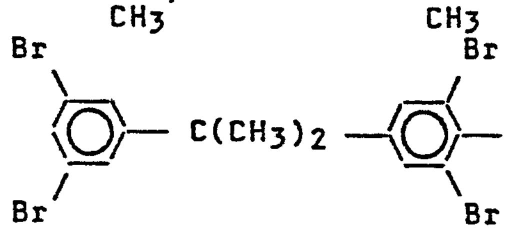

and (2) divalent organic radicals of the general formula

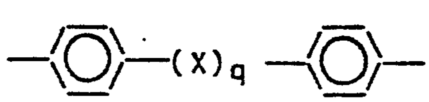

where X is a member selected from the class consisting of divalent radicals of the formula:

$$-C_yH_{2y}-,\ -\overset{O}{\overset{\|}{C}}-,\ -\underset{\underset{O}{\|}}{\overset{\overset{O}{\|}}{S}}-,\ -O-\ \text{and}\ -S-,$$

where q is 0 or 1, y is a whole number from 1 to 5, R is a divalent organic radical selected from the class consisting of (a) aromatic hydrocarbon radicals having from 6-20 carbon atoms and halogenated derivatives thereof, (b) alkylene radicals and cycloalkylene radicals having from 2 to about 20 carbon atoms, $C_{(2-8)}$ alkylene terminated polydiorganosiloxane, and (c) divalent radicals included by the formula:

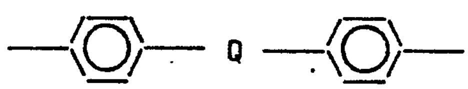

where Q is a member selected from the class consisting of

$$-O-,\ -\overset{O}{\overset{\|}{C}}-,\ -\underset{\underset{O}{\|}}{\overset{\overset{O}{\|}}{S}}-,\ -S-,\ \text{and}\ -C_xH_{2x}-,$$

and x is a whole number from 1 to 5 inclusive, and (B) about 3 wt. % to about 15 wt. % of a polyacrylate elastomer.

2. The blend of claim 1 comprising from about 88 wt. % to about 95 wt. % polyetherimide and from about 5 wt. % to about 12 wt. % polyacrylate elastomer.

3. The blend of claim 1 comprising about 90 wt. % polyetherimide and about 10 wt. % polyacrylate elastomer.

4. The blend of claim 1, 2 or 3 wherein in the polyetherimide, Z is a group of the formula

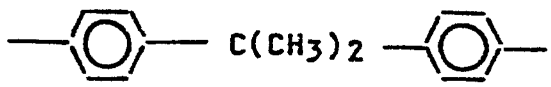

and the polyacrylate elastomer is a homo- or copolymer of a lower alkyl ester of acrylic acid, wherein the alkyl groups contain from 1 to about 10 carbon atoms.

5. The blend of claim 4 wherein, in the polyetherimide, R is m-phenylene.

6. The blend of claim 1, 2 or 3, wherein the polyacrylate elastomer is selected from the group consisting of homopolymers, copolymers and terpolymers of ethyl acrylate, butyl acrylate, hexyl acrylate, 2-ethylhexyl acrylate, methyl methacrylate, or octyl methacrylate.

7. The blend of claim 6, wherein the polyacrylate is polyethylacrylate or polybutylacrylate.